# EUROPÄISCHE PATENTSCHRIFT

(11) **EP 3 194 208 B1**
(45) Veröffentlichungstag und Bekanntmachung des Hinweises auf die Patenterteilung: **15.04.2020**
(21) Anmeldenummer: 15766492.1
(22) Anmeldetag: 18.09.2015
(51) Int. Cl.: B60P 7/13

(54) **VERRIEGELUNGSVORRICHTUNG FÜR CONTAINER**
LOCKING DEVICE FOR CONTAINERS
DISPOSITIF DE VERROUILLAGE POUR CONTENEUR

(30) Priorität: 19.09.2014 DE 102014218891
(43) Veröffentlichungstag der Anmeldung: 26.07.2017
(73) Patentinhaber: JOST-Werke Deutschland GmbH, 63263 Neu-Isenburg (DE)
(72) Erfinder: PAULEKUHN, Hans-Peter, 34454 Bad Arolsen (DE); ALGÜERA, José Manuel, 63739 Aschaffenburg (DE); ALBERS, Stephan, 32361 Pr. Oldendorf (DE)
(74) Vertreter: Mehler Achler
(86) Internationale Anmeldenummer: PCT/EP2015/071513
(87) Internationale Veröffentlichungsnummer: WO 2016/042155

(56) Entgegenhaltungen:
- EP-A2- 2 689 964
- DE-A1- 19 720 238
- DE-U1-202010 005 717
- DE-U1-202010 008 181
- US-A- 5 575 599

## Beschreibung

Die Erfindung betrifft eine Verriegelungsvorrichtung für Container mit den im Oberbegriff des Anspruchs 1 stehenden Merkmalen.

Fahrzeugchassis zur Aufnahme von 40-Fuß und 20-Fuß langen Containern werden häufig als so genannte Gooseneck-Chassis ausgebildet und weisen einen tiefergelegten hinteren Abschnitt sowie einen höhergelegten vorderen Abschnitt auf. Die längeren 40-Fuß Container besitzen einen Gooseneck-Tunnel, in welchen der höhergelegte vordere Abschnitt des Chassis hineinreicht. Sofern anstelle eines 40-Fuß Containers zwei 20-Fuß Container transportiert werden sollen, die üblicherweise ohne Gooseneck-Tunnel ausgebildet sind, stehen diese mit einem Höhenversatz zueinander auf dem vorderen und hinteren Abschnitt des Chassis auf.

Zur Aufnahme von Containern mit und ohne Gooseneck-Tunnel sind am vorderen Ende des vorderen Abschnitts aus dem deutschen Gebrauchsmuster G 91 14 903.7 bekannte Verriegelungen beidseitig angeordnet. Diese weisen einen in horizontaler Ebene verschiebbaren Steckzapfen zur Sicherung eines Containers mit Gooseneck-Tunnel sowie einen um eine vertikale Achse verdrehbaren Drehzapfen zur Sicherung eines Containers anderer Bauart auf.

Einen gattungsbildenden Stand der Technik offenbart die DE 197 20 238 A1 mit einer Containerverriegelung für das vordere Ende des vorderen Abschnittes eines Gooseneck-Chassis. Die bekannte Containerverriegelung umfasst ein Gehäuse, in dem verschiebbar ein Steckzapfen und drehbar ein Drehzapfen gelagert sind, wobei der Steckzapfen und der Drehzapfen derart getrieblich miteinander gekoppelt sind, dass bei einer Betätigung des Drehzapfens auch der Steckzapfen verschoben und/oder bei Betätigung des Steckzapfens auch der Drehzapfen gedreht wird. Hierdurch soll ein Komfort- und Sicherheitsgewinn erreicht werden, da nur ein Betätigungsorgan vorhanden ist, welches auf beide Verrieglungsorgane gleichzeitig einwirkt und dadurch das Risiko einer Fehlbedienung minimiert wird. Als nachteilig hat sich jedoch erwiesen, dass sich während der Beladung immer noch eine Person im Bereich der Containerverriegelungen aufhalten und das jeweilige Betätigungsorgan bedienen muss.

Demzufolge lag der Erfindung die Aufgabe zugrunde, eine durch den Beladevorgang selbsttätig auslösende Verriegelungsvorrichtung für Container bereitzustellen.

Die Aufgabe wird erfindungsgemäß mit den im kennzeichnenden Teil des Anspruchs 1 stehenden Merkmalen gelöst. Die Betätigung der Verriegelungsvorrichtung für Container erfolgt somit semi-automatisch durch eine Annäherung des Containerbeschlages und ein Einschieben des mindestens einen Tastbolzens. Der korrekt aufgeladene Container drückt den Tastbolzen in das Gehäuse, wodurch ausschließlich durch die Vorspannung des Federelementes entweder der Steckzapfen seitlich aus dem Gehäuse vorstößt und/oder der nach oben aus dem Gehäuse ragende Drehzapfen um seine Längsachse verdreht.

Unter einem Drehzapfen wird ein Bolzen mit einem am oberen Ende ausgebildeten Verriegelungskopf verstanden. Der Verriegelungskopf greift von unten in einen Containerbeschlag ein und sichert den Container durch Verdrehen um 90°. Der Drehzapfen ist ein einstückig, integrales Bauteil ohne weitere bewegliche Teile und vollzieht ausschließlich eine rotatorische Bewegung in dessen Umfangsrichtung. Vorzugsweise erstreckt sich der Drehzapfen vollständig durch das Gehäuse und ragt an beiden gegenüberliegenden Enden aus diesem heraus.

Der Steckzapfen dient zur Sicherung eines Containers mit Gooseneck-Tunnel auf einem Gooseneck-Chassis an einem hierfür vorgesehenen Containerbeschlag an der Containerstirnseite. Nach dem Absenken des Containers bis annähernd auf das Niveau des Fahrzeugchassis wird der Container in Fahrtrichtung des Fahrzeugs bis zur Kontaktierung mit dem Gehäuse der Verriegelungsvorrichtungen für Container verschoben und erst anschließend vollständig abgesenkt, so dass der Steckzapfen seitlich in den Containerbeschlag eingeschoben werden kann. Dadurch wird der Container gegen Vertikalbewegungen gesichert. Der Steckzapfen vollzieht eine lineare Bewegung.

Vorzugsweise weist das Gehäuse sechs Seitenwände auf und ist ortsfest an dem Fahrzeugchassis befestigt. Das Gehäuse dient dem Schutz beweglicher Komponenten der Verriegelungsvorrichtung vor Beschädigung und Schmutz, insbesondere der Auslöseeinheit, sowie der Lagerung von Drehzapfen und Steckzapfen.

Es ist jedoch besonders bevorzugt, einen Steckzapfen und einen Drehzapfen vorzusehen und diese kinematisch zu koppeln. Dieses kann beispielsweise über eine jeweils am Steckzapfen und am Drehzapfen ausgebildete und ineinandergreifende Verzahnung erfolgen.

Aufgrund dieser Zwangskoppelung von Steck- und Drehzapfen ist es ausreichend, ein einziges Federelement vorzusehen, welches lediglich an einem der Zapfen befestigt zu sein braucht oder an anderer geeigneter Stelle um diesen anzutreiben. Der andere Zapfen wird ohne ein daran angreifendes Federelement mitbewegt, gelangt jedoch je nach verwendetem Containertyp nicht in Wirkeingriff mit einem Containerbeschlag.

Zweckmäßigerweise ist der mindestens eine Tastbolzen beweglich gegenüber dem Gehäuse gelagert. Gemäß einer besonders vorteilhaften Ausführungsform ist der mindestens eine Tastbolzen in seiner axialen Richtung gegenüber dem Gehäuse verschiebbar geführt. Hierdurch wird ein geradlinig wirkender Bewegungsanteil des sich annähernden Containerbeschlages in das Gehäuse übertragen und dazu genutzt, das Federelement auszulösen.

Vorzugsweise ist der mindestens eine Tastbolzen ein Vertikaltastbolzen, der achsparallel zu dem Drehzapfen angeordnet ist. Der Vertikaltastbolzen kann auch gegenüber dem Drehzapfen derart schräg stehen, dass ein klemmfreies Verschieben möglich ist. Der Drehzapfen wirkt ausschließlich mit einem von oben angenäherten Containerbeschlag zusammen, dessen Bewegungsrichtung von dem Vertikaltastbolzen genutzt wird, um das Federelement zu lösen und den Drehzapfen um seine Hochachse aus der Öffnungsstellung in die Verriegelungsstellung zu schwenken.

Alternativ zu der im Wesentlichen achsparallelen und longitudinal verschiebbaren Ausrichtung des Vertikaltastbolzens zu dem Drehzapfen kann dieser auch drehbeweglich um eine erste Schwenkachse gelagert sein. Bei einer Belastung dieses Vertikaltastbolzens durch den Containerbeschlag schwingt der Vertikaltastbolzen entlang einer Kreisbahn um seine Schwenkachse.

Vorzugsweise ist die erste Schwenkachse rechtwinklig zu einer axialen Erstreckung des Drehzapfens ausgerichtet, ohne auf diesen zulaufen zu müssen. Somit liegt die erste Schwenkachse in einer horizontalen Ebene.

Günstigerweise ragen der Vertikaltastbolzen und der Drehzapfen durch eine gemeinsame Oberwand des Gehäuses hindurch. Dieses ist notwendig, damit der Drehzapfen in den Containerbeschlag von unten eingreifen kann. Der Vertikaltastbolzen steht in der Öffnungsstellung gegenüber der Oberwand vor und wird von dem Containerbeschlag maximal so weit eingedrückt, bis dieser mit der Oberwand abschließt.

Zweckmäßigerweise ist der Vertikaltastbolzen seitlich beabstandet zu dem Drehzapfen angeordnet. Der von oben auf das Gehäuse abgesenkte Containerbeschlag weist auf seiner Unterseite eine Öffnung auf, in welche der Drehzapfen hineinragt. Durch eine Drehbewegung ist der Containerbeschlag gegen Abheben von dem Verriegelungskopf gehalten. Der Vertikaltastbolzen wird jedoch von der Unterseite des Containerbeschlages betätigt, und ist derart versetzt angeordnet, dass er auch bei einem unpräzisen Abstellen des Containers stets mit der Unterseite des Containerbeschlages kontaktiert und sich nicht unter der Öffnung zur Aufnahme des Drehzapfens befindet.

Alternativ oder ergänzend zu dem Vertikaltastbolzen kann der mindestens eine Tastbolzen auch ein Horizontaltastbolzen sein, der achsparallel oder mit einer Schrägstellung, die ein klemmfreies Verschieben ermöglicht, zu dem Steckzapfen ausgerichtet ist. Die Achsparallelität bezieht sich auf den aus dem Gehäuse herausragenden Abschnitt des Steckzapfens, der in eine seitlich im Containerbeschlag eingebrachten Öffnung hineinstößt. Die horizontale Annäherung des Containerbeschlages wir von dem ebenfalls in horizontaler Richtung verschiebbaren Horizontaltastbolzen identifiziert.

Optional zu der im Wesentlichen achsparallelen und longitudinal verschiebbaren Ausrichtung des Horizontaltastbolzens zu dem Steckzapfen kann dieser auch drehbeweglich um eine zweite Schwenkachse gelagert sein. Bei einer Belastung dieses Horizontaltastbolzens durch einen seitlich angenäherten Containerbeschlag schwingt der Horizontaltastbolzen entlang einer Kreisbahn um seine Schwenkachse.

Vorzugsweise ist die zweite Schwenkachse rechtwinklig zu einer axialen Erstreckung des Steckzapfens ausgerichtet, ohne auf diesen zulaufen zu müssen. Somit liegt die zweite Schwenkachse in einer vertikalen Ebene.

Es hat sich als besonders vorteilhaft herausgestellt, wenn der Horizontaltastbolzen und der Steckzapfen durch eine gemeinsame Stirnwand des Gehäuses hindurchragen. Die Stirnwand des Gehäuses dient als Anschlag für den sich horizontal annähernden Containerbeschlag, so dass dieser bei einer Anordnung des Horizontaltastbolzens in der Stirnwand ein frühzeitiges Auslösen des Steckzapfens ermöglicht.

Vorzugsweise ist der Horizontaltastbolzen seitlich beabstandet zu dem Steckzapfen angeordnet. Auch hierdurch soll das Risiko einer fehlenden Auslösung des Steckzapfens verringert werden, die dadurch hervorgerufen sein könnte, dass sich der Horizontaltastbolzen zu nah am Steckzapfen befindet und nicht gegen die Seitenfläche des Containerbeschlages stößt, sondern in die zur Aufnahme des Steckzapfens vorgesehenen Öffnung des Containerbeschlages ragt. Unter einer seitlich beabstandeten Anordnung wird in der Seitenansicht eine versetzte Lage über, unter vor oder hinter dem Steckzapfen verstanden.

Günstigerweise umfasst die Auslöseeinheit einen Fanghaken, gegen den der Vertikaltastbolzen und/oder Horizontaltastbolzen mit seiner dem Containerbeschlag abgewandten Seite im Inneren des Gehäuses anstößt. Hierdurch erfolgt unmittelbar eine Kraftübertragung von dem Vertikaltastbolzen oder dem Horizontaltastbolzen auf den Fanghaken. Der Fanghaken weist einen Bereich mit einer vorzugsweise geschwungenen oder eckig gekrümmten Form auf, welche lösbar an dem Drehzapfen oder Steckzapfen einhakbar ist. Der Fanghaken ist relativ zum Gehäuses derart gelagert, dass dieser durch eine von dem Vertikaltastbolzen oder Horizontaltastbolzen übertragene Stoßbewegung verkippt und den jeweils von dem Federelement vorgespannten Vertikaltastbolzen oder Horizontaltastbolzen freigibt.

Besonders zweckmäßig ist eine Ausführungsform, bei welcher der Drehzapfen oder der Steckzapfen in der Öffnungsstellung von dem Fanghaken gehalten ist. Zum Erreichen der Verriegelungsstellung wird die formschlüssige Verbindung zwischen Fanghaken und Drehzapfen oder Steckzapfen aufgelöst und der jeweilige oder beide Zapfen bewegt/bewegen sich aufgrund der Vorspannung des Federelementes in die Verriegelungsstellung.

An dem Drehzapfen oder dem Steckzapfen kann ein Fangelement ausgebildet sein, welches der Fanghaken in der Öffnungsstellung hintergreift. Das Fangelement weist hierfür vorzugsweise mindestens einen im Wesentlichen senkrecht zur Bewegungsrichtung des Drehzapfens oder Steckzapfens ausgerichteten Wandabschnitt auf.

Vorteilhafterweise ist das Fangelement auf seiner in der Verriegelungsstellung dem Fanghaken zugewandten Seite mit einer gerundeten oder geneigten Auftrefffläche ausgebildet, gegen welche während des Zurückschwenkens des Drehzapfens aus der Verriegelungsstellung in die Öffnungsstellung der Fanghaken stößt und darauf bis zum Erreichen der Öffnungsstellung abgleitet. In der Öffnungsstellung fällt der Fanghaken in seine formschlüssige Halteposition und hintergreift dabei beispielsweise von oben das Fangelement. Dabei kontaktiert insbesondere der geschwungene oder eckig gekrümmte Bereich des Fanghakens den senkrecht zur Bewegungsrichtung ausgerichteten Wandabschnitt des Fangelementes.

Vorzugsweise ist bei einem Einschieben des Vertikaltastbolzens oder des Horizontaltastbolzens in das Gehäuse durch den Containerbeschlag der Fanghaken aus dem Wirkeingriff mit dem Fangelement gelöst und das Federelement bewegt den Steckzapfen und/oder den Drehzapfen in die Verriegelungsstellung. Dieses erfolgt automatisch, das heißt ohne Zwischenschaltung menschlichen Handelns.

Günstigerweise greift an dem Drehzapfen drehfest ein Betätigungshebel an, mit dem der Drehzapfen aus der Verriegelungsstellung in die Öffnungsstellung und dabei das Federelement in eine vorgespannte Position bringbar ist. Vorzugsweise steht der Betätigungshebel in radialer Richtung von einem außerhalb des Gehäuses befindlichen Abschnitt des Drehzapfens vor. Nach einem automatischen Erreichen der Verriegelungsposition wird die Öffnungsstellung des Drehzapfens durch Handbetätigung des Betätigungshebels von einer Bedienperson erreicht.

Zweckmäßigerweise ist das Federelement eine Drehfeder, die an ihrem ersten Ende ortsfest zum Gehäuse gehalten und an ihrem zweiten Ende mit dem Drehzapfen verbunden ist. Die Drehfeder kann beispielsweise als Schraubenfeder oder Spiralfeder ausgebildet sein und sollte bei einer Verdrehung des Drehzapfens um ca. 90° ein ausreichendes Rückstellmoment bereitstellen.

Die Drehfeder kann koaxial um einen Abschnitt des Drehzapfens angeordnet sein. Hierfür eignet sich besonders der untere, aus dem Gehäuse herausragende Abschnitt des Drehzapfens.

Vorteilhafterweise ist die Drehfeder zumindest teilweise außerhalb des Gehäuses angeordnet. Ganz besonders vorteilhaft ist eine Ausführungsform, bei welcher die Drehfeder vollständig außerhalb des Gehäuses angeordnet ist. Diese Bauweise sorgt für besonders kompakte Abmessungen des Gehäuses.

Alternativ zu der Ausführungsform der Erfindung mit einer Drehfeder kann das Federelement auch eine Druckfeder sein, die mit ihrem ersten Ende an dem Steckzapfen angreift und sich mit ihrem zweiten Ende ortsfest am Gehäuse abstützt. Diese Ausführungsform bedingt ein etwas größeres Gehäuse, in welches die Druckfeder zum Beispiel in Form einer Schraubenfeder aufgenommen ist. Die Druckfeder sorgt für einen Vorschub des Steckzapfens und bei Vorhandensein eines damit zwangsgekoppelten Drehzapfens auch ein Verdrehen des Drehzapfens aus der Öffnungsstellung in die Verriegelungsstellung.

Vorzugsweise greift das erste Ende an einem permanent innerhalb des Gehäuses befindlichen Abschnitt des Steckzapfens an. In diesem Bereich ist der Steckzapfen ausreichend in radialer Richtung abgestützt und die Druckfeder braucht keine lateral wirkenden Kräfte aufzunehmen.

Günstigerweise ist die Druckfeder vollständig innerhalb des Gehäuses angeordnet, wodurch die Schmutzanfälligkeit verringert und die betriebliche Verfügbarkeit der Verriegelungsvorrichtung für Container erhöht wird.

Vorteilhafterweise durchläuft der Steckzapfen das Gehäuse in seiner Öffnungsstellung und ragt aus der dem Containerbeschlag gegenüberliegenden Stirnwand heraus. In seiner Verrieglungsstellung kann der Steckzapfen mit der dem Containerbeschlag gegenüberliegenden Stirnwand abschließen, gegenüber dieser zurückversetzt sein oder weniger weit herausragen als in der Öffnungsstellung. Aufgrund dieser Ausgestaltung kann der Steckbolzen als Anzeige bezüglich des Öffnungs- und/oder Verschlusszustandes genutzt werden.

Zum besseren Verständnis wird die Erfindung nachfolgend anhand von 11 Figuren näher erläutert. Es zeigen die
- **Fig. 1:**: eine Seitenansicht auf eine erste Ausführungsform der Erfindung bei Containerverladung von oben in Öffnungsstellung von Dreh- und Steckzapfen;
- **Fig. 2:**: eine Seitenansicht auf die Ausführungsform gemäß Fig. 1 bei Containerverladung von oben und in das Gehäuse eingeschobenem Vertikaltastbolzen;
- **Fig. 3:**: eine Seitenansicht auf die Ausführungsform gemäß Fig. 1 bei Containerverladung von oben in Verriegelungsstellung von Dreh- und Steckzapfen;
- **Fig. 4:**: eine Seitenansicht auf die Ausführungsformgemäß Fig. 1 bei Frontbeladung des Containers in Öffnungsstellung von Dreh- und Streckzapfen;
- **Fig. 5:**: eine Seitenansicht auf die Ausführungsform gemäß Fig. 1 bei Frontbeladung des Containers und in das Gehäuse eingeschobenem Horizontaltastbolzen;
- **Fig. 6:**: eine Seitenansicht auf die Ausführungsform gemäß Fig. 1 bei Frontbeladung des Containers in Verriegelungsstellung von Dreh- und Steckzapfen;
- **Fig. 7:**: eine Vorkopfansicht auf die Ausführungsform gemäß Fig. 1 bei Containerverladung von oben in Verriegelungsstellung von Dreh- und Steckzapfen;
- **Fig. 8:**: eine Seitenansicht auf eine zweite Ausführungsform der Erfindung zur ausschließlichen Containerbeladung von oben in Öffnungsstellung des Drehzapfens;
- **Fig. 9:**: eine Seitenansicht auf eine dritte Ausführungsform der Erfindung zur ausschließlichen Frontbeladung des Containers in Öffnungsstellung des Steckzapfens;
- **Fig. 10:**: einen Horizontalschnitt durch eine vierte Ausführungsform der Erfindung mit am Steckzapfen angreifendem Federelement und
- **Fig. 11:**: eine Seitenansicht auf eine fünfte Ausführungsform der Erfindung mit schwenkbar gelagerten Vertikal- und Horizontaltastbolzen.

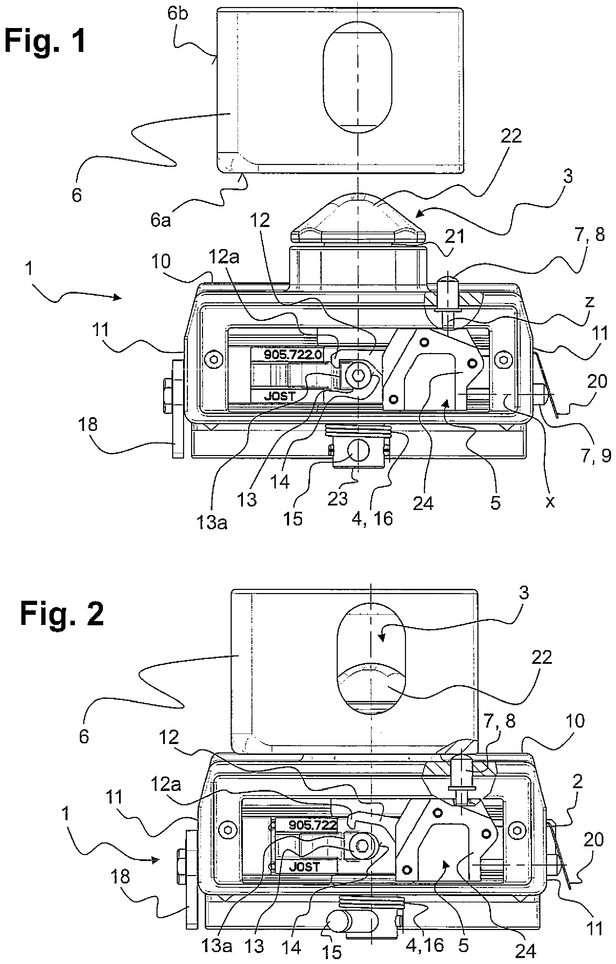

Die Figuren 1 bis 3 zeigen in einer Seitenansicht eine Verriegelungsvorrichtung für Container mit einem sich sukzessive von oben annähernden Containerbeschlag 6.

Die Verriegelungsvorrichtung für Container umfasst ein kastenartiges Gehäuse 1 mit einer Oberwand 10 und zwei seitlich dazu angeordneten Stirnwänden 11. Mittels weiterer, nicht näher bezeichneter Seitenwände und einer Bodenwand ist das Gehäuse 1 verschlossen .

Das Gehäuse 1 ist vollständig von einem Drehzapfen 3 durchsetzt, wobei dessen oberes Ende 21 durch die Oberwand 10 hindurchtritt und in einen pilzkopfförmigen Verriegelungskopf 22 übergeht. Der Verriegelungskopf 22 ragt bei einem abgesenkten Container von einer Unterseite 6a in den Containerbeschlag 6 hinein und hält diesen, nach einem Verschwenken um ca. 90°, insbesondere gegen Abheben fest. Das untere Ende 23 des Drehzapfens 3 ragt unten aus dem Gehäuse 1 heraus.

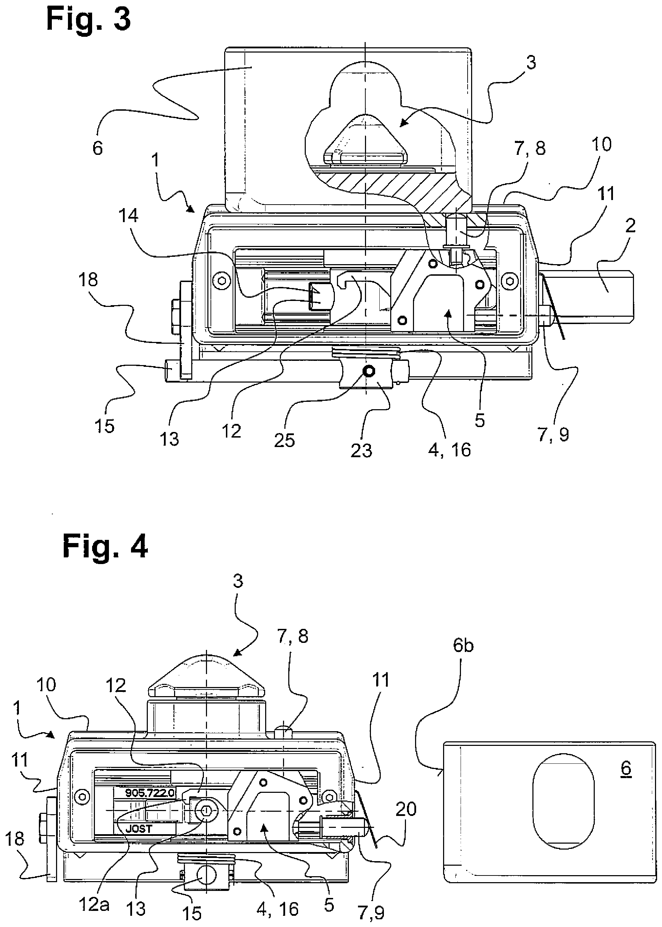

In der gezeigten Ausführungsform ist neben dem beschriebenen Drehzapfen 3 noch ein weiteres Verriegelungsmittel in Form eines Steckzapfens 2 vorhanden, um gegebenenfalls auch Container mit einem Gooseneck-Tunnel aufnehmen zu können. Diese Container werden mit ihrem Containerbeschlag 6 nicht von oben auf die Verriegelungsvorrichtung für Container aufgesetzt, sondern seitlich davorgeschoben, wobei der entsprechende Containerbeschlag 6 eine Öffnung zur Aufnahme des Steckbolzens 2 aufweist. Der Beladungsvorgang und die beteiligten Bauteile der Verriegelungsvorrichtung für Container sind in den Figuren 4 bis 6 näher erläutert.

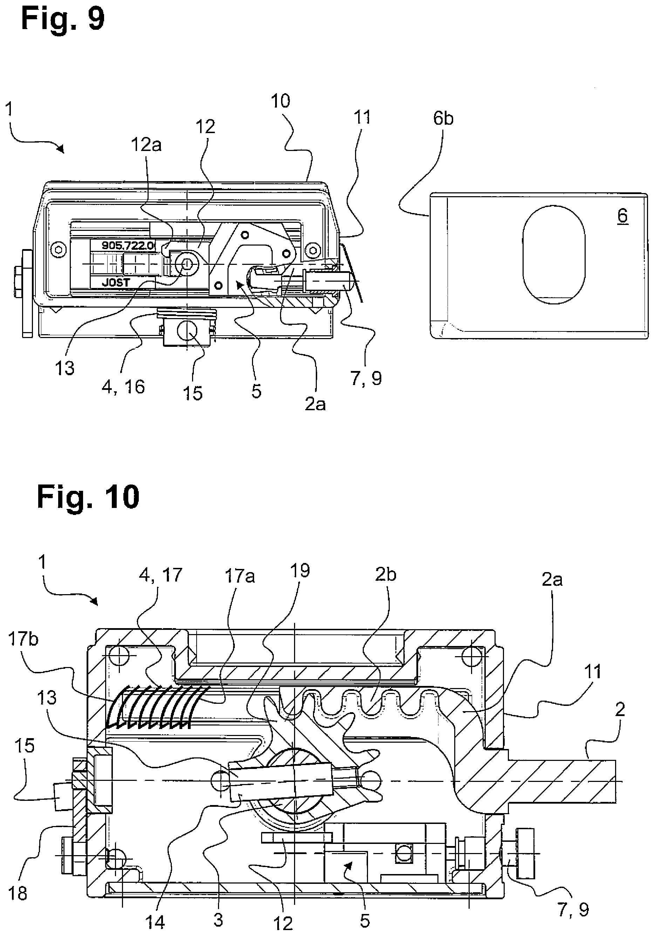

Wie besonders gut in Fig. 10 zu erkennen ist, weist der Drehzapfen 3 ein in radialer Richtung vorstehendes Zahnsegment 19 auf, welches in permanenten Eingriff mit einem an dem Steckzapfen 2 angeformten Zahnstangenabschnitt 2b in Eingriff steht. Hierdurch bilden der Drehzapfen 3 und der Steckzapfen 2 ein Getriebe und sind miteinander zwangsgekoppelt.

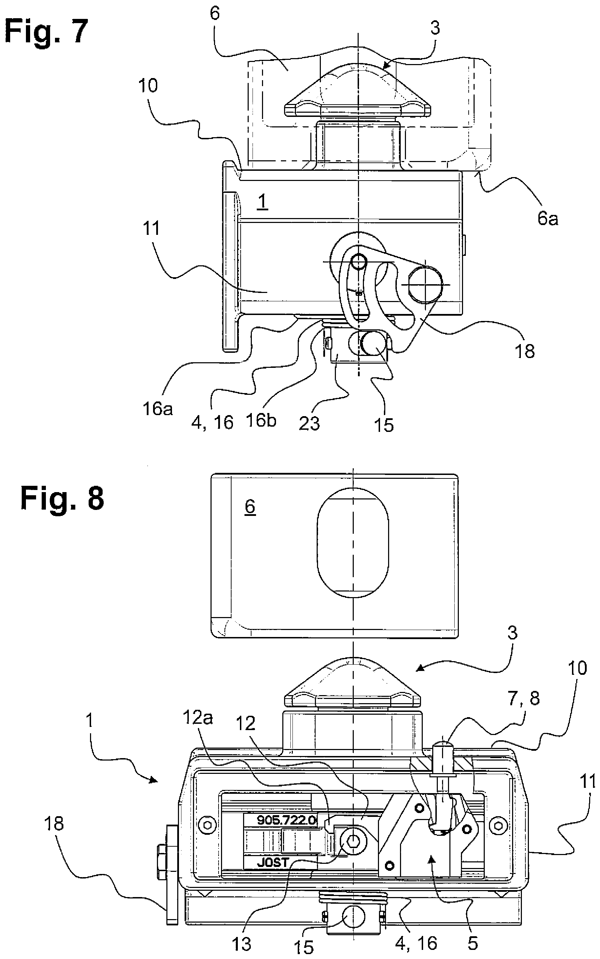

Aufgrund der Zwangskopplung von Drehzapfen 3 und Steckzapfen 2 ist es bei der ersten Ausführungsform gemäß der Figuren 1 bis 7 ausreichend, ein Federelement 4 mit dem Drehzapfen 3 oder dem Steckzapfen 2 zu verbinden. Sofern das Federelement 4 mit dem Drehzapfen 3 zusammenwirkt, kann dieses als Drehfeder 16 ausgebildet sein, die Ihre Rückstellkraft in den Drehzapfen 3 einleitet. Das erste Ende 16a der Drehfeder 16 ist ortsfest zum oder unmittelbar am Gehäuse 1 und das gegenüberliegende, zweite Ende 16b an dem Drehzapfen 3 fixiert (siehe Fig. 7). Die Drehfeder 16 entfaltet ihre Rückstellkraft besonders effektiv, wenn sie koaxial auf das untere Ende 23 des Drehzapfens 3 aufgeschoben ist.

Im inneren des Gehäuses 1 ist eine Auslöseeinheit 5 angeordnet, die mindestens einen Tastbolzen 7 und einen Fanghaken 12 umfasst. Da der mindestens eine Tastbolzen 7 sowohl eine vertikale als auch eine horizontale Annäherung des Containerbeschlages 6 sensieren soll, sind ein Vertikaltastbolzen 8 und eine Horizontaltastbolzen 9 vorgesehen. Der Vertikaltastbolzen 8 und der Horizontaltastbolzen 9 sind jeweils innerhalb des Gehäuses 1 verschiebbar geführt und ragen durch entsprechende Bohrungen aus dem Gehäuse 1 heraus. Dabei durchbricht der Vertikaltastbolzen 8 die Oberwand 10 und der Horizontaltastbolzen 9 die daran angrenzende Stirnwand 11. Aufgrund des Überstandes des Vertikaltastbolzens 8 gegenüber der Oberwand 10 trifft die Unterseite 6a des Containerbeschlages 6 bei einem Absenken des Containers zunächst auf den Vertikaltastbolzen 8 und schiebt diesen solange in das Gehäuse 1, bis er bündig mit der Oberwand 10 des Gehäuses 1 abschließt.

Aufgrund des Überstandes des Horizontaltastbolzens 9 gegenüber der Stirnwand 11 trifft eine Seitenfläche 6b des Containerbeschlages 6 bei einem seitlichen Aufladen des Containers zunächst auf den Horizontaltastbolzen 9 und schiebt diesen solange in das Gehäuse 1, bis er bündig mit der Stirnwand 11 des Gehäuses 1 abschließt.

Ein wesentlicher Aspekt der Erfindung betrifft auch die Ausrichtung des Vertikaltastbolzens 8 zu dem Horizontaltastbolzen 9, deren axiale Bewegungsachsen x, z aufeinander zulaufen und zudem in einer senkrechten Ebene liegen. Der Vertikaltastbolzen 8 und der Horizontaltastbolzen 9 können daher nach entsprechendem Einschub durch einen Containerbeschlag 6 im Inneren des Gehäuses 1 beide gegen den Fanghaken 12 stoßen.

Der Fanghaken 12 ist innerhalb des Gehäuses 1 in einer Kulisse 24 um eine horizontale Achse drehbeweglich gelagert und schwenkt bei Ausübung einer Schubkraft von dem Vertikaltastbolzen 8 oder von dem Horizontaltastbolzen 9 nach oben.

In der Figur 1 ist der Containerbeschlag 6 noch beabstandet zu dem Vertikaltastbolzen 8 angeordnet und der Drehzapfen 3 befindet sich in einer Öffnungsstellung, bei welcher die Drehfeder 16 eine rotatorische Rückstellkraft auf den Drehzapfen 3 ausübt. Der Drehzapfen 3 ist innerhalb des Gehäuses 1 mit einem radial vorstehenden Fangelement 13 ausgebildet. An dem Fangelement 13 greift der Fanghaken 12 der Auslöseeinheit 5 an und verhindert eine rotatorische Drehbewegung in Richtung der Federkraft der Drehfeder 16. Der Fanghaken 13 ist hierfür endseitig mit einem geschwungenen oder eckig gekrümmten Bereich 12a versehen, der über das Fangelement 13 hinweggreift. Auf der bezüglich der Auslöseeinheit 5 abgewandten Seite weist das Fangelement 13 einen senkrechten Wandabschnitt 13a auf, an dem der eckig gekrümmte Bereich 12 anliegt.

In der Figur 2 hat der Containerbeschlag 6 den Vertikaltastbolzen 8 annähernd bündig mit der Oberwand 10 in das Gehäuse 1 eingedrückt, wobei der Containerbeschlag 6 noch ca. 6mm zu der Oberwand 10 beabstandet ist. Der Fanghaken 12 schwenkt bereits hier hoch und gibt dem Fangelement 13 den Verriegelungsvorgang frei.. In der gezeigten Ausführungsform verkippt der Vertikaltastbolzen 8 den Fanghaken 12 um eine horizontale Schwenkachse, so dass sich dessen eckig gekrümmter Bereich 12a von dem senkrechten Wandabschnitt 13a ablöst und der Drehzapfen 3 aufgrund der Federkraft der Drehfeder 16 in die Verriegelungsstellung entsprechend der Darstellung in Fig. 3 rotiert. Da der Steckzapfen 2 kinematisch mit dem Drehzapfen 3 zwangsgekoppelt ist, befindet sich auch der Steckzapfen 2 in der Verriegelungsstellung, obwohl kein geeigneter Containerbeschlag 6 im Einwirkungsbereich vorhanden ist.

In der Verriegelungsstellung des Drehzapfens 3 bei einem vollständig aufgesetzten Container entsprechend der Figur 3 ist der Fanghaken 13 bereits übergesprungen und hat wieder die ursprüngliche Stellung eingenommen, wodurch es möglich ist, die Verriegelung bei aufgesetztem Container bzw. betätigtem Tastbolzen 7 zu öffnen. Der Fanghaken 13 wird während der Verriegelung nur kurz angehoben und fällt dann wieder in die Ursprungsstellung zurück, um ein späteres Öffnen der Verriegelungsvorrichtung zu ermöglichen. An dem unteren Ende 23 des Drehzapfens 3 ist ein fest daran angebrachter Betätigungshebel 15 zu erkennen, der zusammen mit dem Drehzapfen 3 gegenüber der Stellung in Fig. 1 um ca. 90° geschwenkt und nunmehr in seiner gesamten Länge sichtbar ist. Um während des Transportes ein versehentliches Lösen der Verriegelungsstellung zu verhindern, ist an der dem Ende des Betätigungshebels 15 nächstgelegenen Stirnwand 11 eine Falle 18 angebracht, die beim Schwenken in die Verriegelungsstellung vom Betätigungshebel 15 hochgedrückt wird und aufgrund der Schwerkraft wieder in eine fixierte Position zurückfällt. Für ein Zurückschwenken des Betätigungshebels 15 in die Öffnungsposition des Drehzapfens 3 muss die Falle 18 manuell angehoben und der Betätigungshebel 15 unter der Falle 18 hindurchgeschwenkt werden.

In der gezeigten Ausführungsform ist der Betätigungshebel 15 in eine komplementäre Bohrung innerhalb des unteren Endes 23 des Drehzapfens 3 eingeschoben und gegen Herausfallen mit einer Madenschraube 25 gesichert. Mit Hilfe des Betätigungshebels 15 kann der Drehzapfen 3 vor einem Abladen des Containers zurück in die Öffnungsstellung geschwenkt werden. Damit der Fanghaken 12 während dieses Schwenkvorganges von dem Fangelement 13 hochgedrückt, anschließend das Fangelement 13 unter dem Fanghaken 12 hindurchschwenken und sich abschließend der Fanghaken 12 von oben auf das Fangelement 13 legen kann, weist dieses zum Anheben des Fanghakens 12 eine geneigte oder gerundete Auftrefffläche 14 auf.

Die Figuren 4 bis 7 verdeutlichen die Annäherung eines zu einem Gooseneck-Container gehörigen Containerbeschlages 6 in horizontaler Richtung. Der Horizontaltastbolzen 9 ist zur Vergrößerung der Trefferfläche von einer Prallplatte 20 überdeckt. Die Prallplatte 20 ist drehbeweglich an der Stirnwand 11 des Gehäuses 1 befestigt und liegt lose auf dem Horizontaltastbolzen 9 auf.

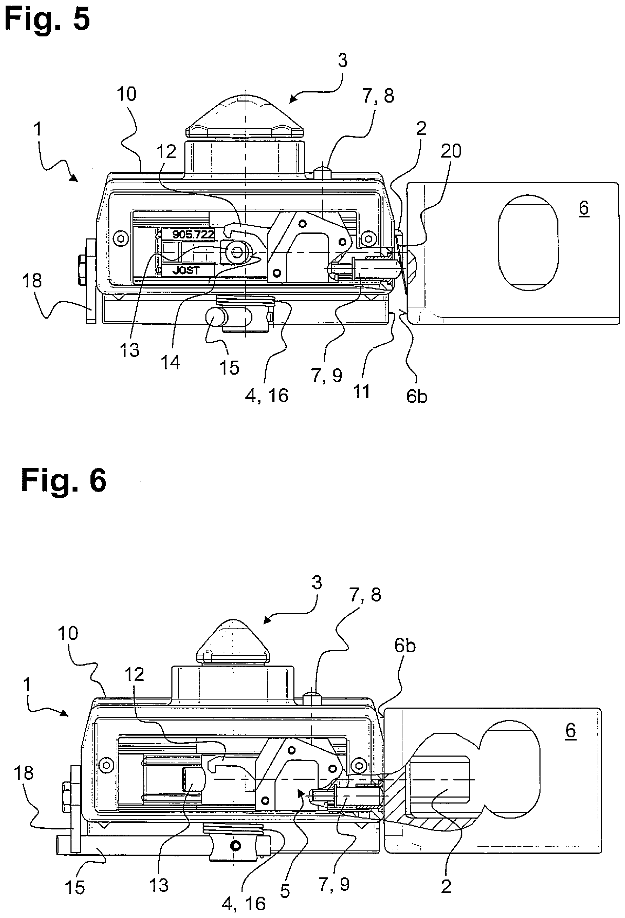

Bei einer weiteren horizontalen Annäherung des Containerbeschlages 6 entsprechend Fig. 5 stößt dieser zunächst gegen die Prallplatte 20, welche den Horizontaltastbolzen 9 in das Gehäuse 1 hineinschiebt und den Fanghaken 12 aus dem Kontakt mit dem Fangelement 13 hebt. Hierdurch rotiert der über die Drehfeder 16 federvorgespannte aber nicht in Eingriff mit einem Containerbeschlag 6 befindliche Drehzapfen 3 in seine Verriegelungsstellung und bewegt mittels seines Zahnsegmentes 19 auch den Zahnstangenabschnitt 2b des Steckzapfens 2 (siehe Fig. 10).

Die Fig. 8 zeigt eine zweite Ausführungsform der Erfindung, bei welcher ein einziger Tastbolzen 7 in Form eines Vertikaltastbolzens 8 vorgesehen ist, der ausschließlich mit dem Drehzapfen 3 zusammenwirkt. Diese Ausführungsform ist lediglich für Fahrzeuge geeignet, die ausschließlich Standardcontainer ohne Gooseneck-Tunnel transportieren. Ein horizontal verfahrbarer Steckzapfen 2 und ein dazugehöriger Horizontaltastbolzen 9 werden hierfür nicht benötigt.

In der Fig. 9 ist eine dritte Ausführungsform dargestellt, die ausschließlich für das Verriegeln von Containern mit Gooseneck-Tunnel vorgesehen ist und dafür einen einzigen Tastbolzen 7 in Form eines Horizontaltastbolzens 9 aufweist, der ausschließlich mit dem Steckzapfen 3 zusammenwirkt. Ein um die vertikale Achse schwenkbarer Drehzapfen 3 und ein dazugehöriger Vertikaltastbolzen 8 werden für diesen Anwendungsfall nicht benötigt.

Die Fig. 10 zeigt eine vierte Ausführungsform der Erfindung, bei der als Federelement 4 anstelle einer Drehfeder 16 eine Druckfeder 17 verwendet wird. Die Druckfeder 17 bringt eine Vorspannung ausschließlich durch eine translatorische Bewegung auf und ist daher nicht mit dem Drehzapfen 3, sondern mit dem Steckzapfen 2 verbunden. Vorzugsweise ist die Druckfeder 17 auf einen ausschließlich im Gehäuse 1 angeordneten Steckzapfenabschnitt 2a koaxial aufgeschoben und stützt sich mit einem ersten Ende 17a an dem Steckzapfen 2 und mit ihrem gegenüberliegenden zweiten Ende 17b an dem Gehäuse 1, insbesondere an dessen Stirnwand 11 ab. Dabei ist die Druckfeder 17 stets vollständig von dem Gehäuse 1 umgeben.

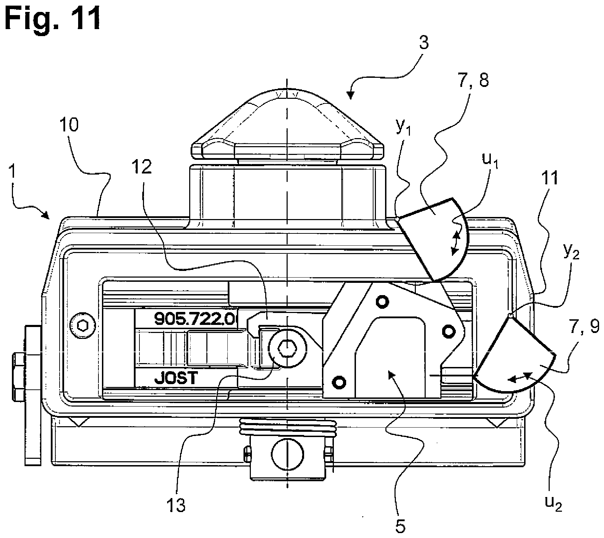

Die Figur 11 zeigt eine fünfte Ausführungsform der Erfindung, bei welcher anstelle von longitudinal gegenüber dem Gehäuse 1 verschiebbar gelagerten Vertikaltastbolzen 8 und Horizontaltastbolzen 9 schwenkbar gelagerte Vertikaltastbolzen 8 und Horizontaltastbolzen 9 vorgesehen sind.

Der Vertikaltastbolzen 8 ist mittels einer ersten Schwenkachse y₁ scharnierartig an der Oberwand 10 des Gehäuses 1 befestigt, steht in der Öffnungsstellung des Drehzapfens 3 gegenüber der Oberwand 10 vor und schwingt bei Auflast durch einen Containerbeschlag 6 in das Gehäuse 1 hinein. Dabei vollzieht der Vertikaltastbolzen 8 eine Schwenkbewegung u₁ um die Schwenkachse y₁. Aufgrund der Schwenkbewegung u₁ in das Gehäuse 1 hinein, löst der Vertikaltastbolzen 8 den Fanghaken 12 aus einer Eingriffsstellung mit dem Fangelement 13 und der mittels des Federelementes 4 vorgespannte Drehzapfen 3 schwenkt aus der gezeigten Öffnungsstellung in die Verschlussstellung. Die Schwenkachse y₁ liegt in einer Ebene mit der Oberwand 10.

In gleicher Weise löst die Verriegelungsvorrichtung bei einer seitlichen Annäherung eines Containerbeschlages 6 an den Horizontaltastbolzen 9 aus, wobei dieser um eine zweite Schwenkachse y₂ drehbeweglich gegenüber der Stirnwand 11 gelagert ist. Die zweite Schwenkachse y₂ ermöglicht eine Schwenkbewegung u₂ des Horizontaltastbolzens 9 in das Gehäuse 1 hinein, wodurch der Fanghaken 12 den Drehzapfen 3 freigibt. Die Schwenkachse y₂ liegt in einer Ebene mit der dem Containerbeschlag 6 zugewandten Stirnwand 11.

### Bezugszeichenliste

- 1: Gehäuse
- 2: Steckzapfen
- 2a: Steckzapfenabschnitt im Gehäuse
- 2b: Zahnstangenabschnitt Steckzapfen
- 3: Drehzapfen
- 4: Federelement
- 5: Auslöseeinheit
- 6: Containerbeschlag
- 6a: Unterseite Containerbeschlag
- 6b: Seitenfläche Containerbeschlag
- 7: Tastbolzen Auslöseeinheit
- 8: Vertikaltastbolzen
- 9: Horizontaltastbolzen
- 10: Oberwand Gehäuse
- 11: Stirnwand Gehäuse
- 12: Fanghaken Auslöseeinheit
- 12a: gekrümmter Bereich Fanghaken
- 13: Fangelement
- 13a: senkrechter Abschnitt Fangelement
- 14: Auftrefffläche Fangelement
- 15: Betätigungshebel
- 16: Drehfeder
- 16a: erstes Ende Drehfeder
- 16b: zweites Ende Drehfeder
- 17: Druckfeder
- 17a: erstes Ende Druckfeder
- 17b: zweites Ende Druckfeder
- 18: Falle Betätigungshebel
- 19: Zahnsegment
- 20: Prallplatte
- 21: oberes Ende Drehzapfen
- 22: Verriegelungskopf Drehzapfen
- 23: unteres Ende Drehzapfen
- 24: Kulisse
- 25: Madenschraube oder Spannhülse

- u₁: Schwenkbewegung Vertikaltastbolzen
- u₂: Schwenkbewegung Horizontaltastbolzen
- x: Bewegungsachse Horizontaltastbolzen
- y₁: erste Schwenkachse Vertikaltastbolzen
- y₂: zweite Schwenkachse Horizontaltastbolzen
- z: Bewegungsachse Vertikaltastbolzen

## Patentansprüche

1. Verriegelungsvorrichtung für Container an einem Fahrzeugchassis, mit einem Gehäuse (1), einem im Gehäuse (1) verschiebbar gelagerten Steckzapfen (2) und/oder einem im Gehäuse (1) drehbar gelagerten Drehzapfen (3), wobei der Steckzapfen (2) und/oder der Drehzapfen (3) zwischen einer Öffnungsstellung und einer Verriegelungsstellung verfahrbar ist/sind,
**dadurch gekennzeichnet,**
**dass** an dem Steckzapfen (2) oder dem Drehzapfen (3) ein Federelement (4) angreift, welches mit einer Auslöseeinheit (5) zusammenwirkt, wobei die Auslöseeinheit (5) mindestens einen in der Öffnungsstellung aus dem Gehäuse (1) in Richtung eines Containerbeschlages (6) herausragenden Tastbolzen (7) aufweist.

2. Verriegelungsvorrichtung nach Anspruch 1, **dadurch gekennzeichnet, dass** der mindestens eine Tastbolzen (7) ein Vertikaltastbolzen (8) ist, der achsparallel oder mit einer Schrägstellung, die ein klemmfreies Verschieben ermöglicht, zu dem Drehzapfen (3) angeordnet ist.

3. Verriegelungsvorrichtung nach Anspruch 1 oder 2, **dadurch gekennzeichnet, dass** der mindestens eine Tastbolzen (7) ein Vertikaltastbolzen (8) ist, der drehbeweglich um eine erste Schwenkachse (y₁) gelagert ist.

4. Verriegelungsvorrichtung nach einem der Ansprüche 2 oder 3, **dadurch gekennzeichnet, dass** der Vertikaltastbolzen (8) und der Drehzapfen (3) durch eine gemeinsame Oberwand (10) des Gehäuses (1) hindurchragen.

5. Verriegelungsvorrichtung nach einem der Ansprüche 1 bis 4, **dadurch gekennzeichnet, dass** der mindestens eine Tastbolzen (7) ein Horizontaltastbolzen (9) ist, der achsparallel oder mit einer Schrägstellung, die ein klemmfreies Verschieben ermöglicht, zu dem Steckzapfen (2) ausgerichtet ist.

6. Verriegelungsvorrichtung nach einem der Ansprüche 1 bis 5, **dadurch gekennzeichnet, dass** der mindestens eine Tastbolzen (7) ein Horizontaltastbolzen (9) ist, der drehbeweglich um eine zweite Schwenkachse (y₂) gelagert ist.

7. Verriegelungsvorrichtung nach Anspruch 6, **dadurch gekennzeichnet, dass** die zweite Schwenkachse (y₂) rechtwinklig zu einer axialen Erstreckung des Steckzapfens (2) ausgerichtet ist.

8. Verriegelungsvorrichtung nach einem der Ansprüche 5 bis 7, **dadurch gekennzeichnet, dass** der Horizontaltastbolzen (9) und der Steckzapfen (2) durch eine gemeinsame Stirnwand (11) des Gehäuses (1) hindurchragen.

9. Verriegelungsvorrichtung nach einem der Ansprüche 5 bis 8, **dadurch gekennzeichnet, dass** die Auslöseeinheit (5) einen Fanghaken (12) umfasst, gegen den der Vertikaltastbolzen (8) und/oder der Horizontaltastbolzen (9) mit seiner dem Containerbeschlag (6) abgewandten Seite anstößt.

10. Verriegelungsvorrichtung nach Anspruch 9, **dadurch gekennzeichnet, dass** der Drehzapfen (3) oder der Steckzapfen (2) in der Öffnungsstellung gegen die Vorspannung des Federelementes von dem Fanghaken (12) gehalten ist.

11. Verriegelungsvorrichtung nach Anspruch 9 oder 10, **dadurch gekennzeichnet, dass** an dem Drehzapfen (3) oder dem Steckzapfen (2) ein Fangelement (13) ausgebildet ist, welches der Fanghaken (12) in der Öffnungsstellung hintergreift.

12. Verriegelungsvorrichtung nach Anspruch 11, **dadurch gekennzeichnet, dass** das Fangelement (13) auf seiner dem Fanghaken (12) zugewandten Seite mit einer gerundeten oder geneigten Auftrefffläche (14) ausgebildet ist, gegen welche während des Zurückschwenkens des Drehzapfens (3) oder des Steckzapfens aus der Verriegelungsstellung in die Öffnungsstellung der Fanghaken (12) stößt und darauf bis zum Erreichen der Öffnungsstellung abgleitet.

13. Verriegelungsvorrichtung nach Anspruch 11 oder 12, **dadurch gekennzeichnet, dass** sich bei einem Einschieben des Vertikaltastbolzens (8) oder des Horizontaltastbolzens (9) in das Gehäuse (1) der Fanghaken (12) aus dem Wirkeingriff mit dem Fangelement (13) löst und das Federelement (4) den Steckzapfen (2) und/oder den Drehzapfen (3) in die Verriegelungsstellung bewegt.

14. Verriegelungsvorrichtung nach einem der Ansprüche 1 bis 13, **dadurch gekennzeichnet, dass** an dem Drehzapfen (3) drehfest ein Betätigungshebel (15) angreift, mit dem der Drehzapfen (3) aus der Verriegelungsstellung in die Öffnungsstellung und dabei das Federelement (4) in eine vorgespannte Position bringbar ist.

15. Verriegelungsvorrichtung nach einem der Ansprüche 1 bis 14, **dadurch gekennzeichnet, dass** das Federelement (4) eine Drehfeder (16) ist, die an ihrem ersten Ende (16a) mit dem Gehäuse (1) und an ihrem zweiten Ende (16b) mit dem Drehzapfen (3) verbunden ist.

## Claims

1. Locking device for containers on a vehicle chassis, having a housing (1), a spigot (2) which is displaceably supported in the housing (1) and/or a pivot pin (3) which is rotatably supported in the housing (1), wherein the spigot (2) and/or the pivot pin (3) can be moved between an open position and a locking position, **characterised in that**
there engages on the spigot (2) or the pivot pin (3) a resilient element (4) which cooperates with a release unit (5), wherein the release unit (5) has at least one touch pin (7) which protrudes in the open position from the housing (1) in the direction of a container fitting (6).

2. Locking device according to claim 1, **characterised in that** the at least one touch pin (7) is a vertical touch pin (8), which is arranged in an axially parallel manner or with an inclined position which enables jamming-free displacement with respect to the pivot pin (3).

3. Locking device according to claim 1 or claim 2, **characterised in that** the at least one touch pin (7) is a vertical touch pin (8) which is supported in a rotationally movable manner about a first pivot axis (y₁).

4. Locking device according to either claim 2 or claim 3, **characterised in that** the vertical touch pin (8) and the pivot pin (3) protrude through a common upper wall (10) of the housing (1).

5. Locking device according to any one of claims 1 to 4, **characterised in that** the at least one touch pin (7) is a horizontal touch pin (9) which is orientated in an axially parallel manner or with an inclined position which enables a jamming-free displacement with respect to the spigot (2).

6. Locking device according to any one of claims 1 to 5, **characterised in that** the at least one touch pin (7) is a horizontal touch pin (9) which is supported in a rotationally movable manner about a second pivot axis (y₂).

7. Locking device according to claim 6, **characterised in that** the second pivot axis (y₂) is orientated at right angles with respect to an axial extent of the spigot (2).

8. Locking device according to any one of claims 5 to 7, **characterised in that** the horizontal touch pin (9) and the spigot (2) protrude through a common end wall (11) of the housing (1).

9. Locking device according to any one of claims 5 to 8, **characterised in that** the release unit (5) comprises a catch hook (12), which the vertical touch pin (8) and/or the horizontal touch pin (9) strikes with the side thereof facing away from the container fitting (6).

10. Locking device according to claim 9, **characterised in that** the pivot pin (3) or the spigot (2) is retained in the open position counter to the pretensioning of the resilient element by the catch hook (12).

11. Locking device according to claim 9 or claim 10, **characterised in that** there is formed on the pivot pin (3) or the spigot (2) a catch element (13) behind which the catch hook (12) engages in the open position.

12. Locking device according to claim 11, **characterised in that** the catch element (13) is formed at the side thereof facing the catch hook (12) with a rounded or inclined impact surface (14), which the catch hook (12) strikes during the pivoting back of the pivot pin (3) or the spigot from the locking position into the open position and on which it slides until reaching the open position.

13. Locking device according to claim 11 or claim 12, **characterised in that**, when the vertical touch pin (8) or the horizontal touch pin (9) is inserted into the housing (1), the catch hook (12) is released from active engagement with the catch element (13) and the resilient element (4) moves the spigot (2) and/or the pivot pin (3) into the locking position.

14. Locking device according to any one of claims 1 to 13, **characterised in that** there engages on the pivot pin (3) in a rotationally secure manner an actuation lever (15), by means of which the pivot pin (3) can be moved from the locking position into the open position and in this instance the resilient element (4) can be moved into a pretensioned position.

15. Locking device according to any one of claims 1 to 14, **characterised in that** the resilient element (4) is a rotary spring (16) which is connected at the first end (16a) thereof to the housing (1) and at the second end (16b) thereof to the pivot pin (3) .

## Revendications

1. Dispositif de verrouillage dévolu à des conteneurs situés sur un châssis de véhicule, comprenant un boîtier (1), un tenon enfichable (2) monté à coulissement dans le boîtier (1) et/ou un tenon rotatif (3) monté à rotation dans ledit boîtier (1), ledit tenon enfichable (2) et/ou ledit tenon rotatif (3) pouvant être déplacé(s) entre une position d'ouverture et une position de verrouillage, **caractérisé par le fait**
**qu'**un élément élastique (4), venant en prise avec le tenon enfichable (2) ou avec le tenon rotatif (3), coopère avec une unité de déclenchement (5), laquelle unité de déclenchement (5) est munie d'au moins un palpeur (7) faisant saillie hors du boîtier (1), dans la position d'ouverture, en direction d'un raccord (6) de conteneur.

2. Dispositif de verrouillage selon la revendication 1, **caractérisé par le fait que** le palpeur (7) à présence minimale est un palpeur vertical (8) agencé, par rapport au tenon rotatif (3), avec parallélisme axial ou avec une position inclinée autorisant un coulissement exempt de coincement.

3. Dispositif de verrouillage selon la revendication 1 ou 2, **caractérisé par le fait que** le palpeur (7), à présence minimale, est un palpeur vertical (8) monté avec mobilité rotatoire autour d'un premier axe de pivotement (y₁).

4. Dispositif de verrouillage selon l'une des revendications 2 ou 3, **caractérisé par le fait que** le palpeur vertical (8) et le tenon rotatif (3) traversent, de part en part, une paroi supérieure commune (10) du boîtier (1).

5. Dispositif de verrouillage selon l'une des revendications 1 à 4, **caractérisé par le fait que** le palpeur (7) à présence minimale est un palpeur horizontal (9) orienté, par rapport au tenon enfichable (2), avec parallélisme axial ou avec une position inclinée autorisant un coulissement exempt de coincement.

6. Dispositif de verrouillage selon l'une des revendications 1 à 5, **caractérisé par le fait que** le palpeur (7), à présence minimale, est un palpeur horizontal (9) monté avec mobilité rotatoire autour d'un second axe de pivotement (y₂).

7. Dispositif de verrouillage selon la revendication 6, **caractérisé par le fait que** le second axe de pivotement (y₂) est orienté à angle droit par rapport à une étendue axiale du tenon enfichable (2).

8. Dispositif de verrouillage selon l'une des revendications 5 à 7, **caractérisé par le fait que** le palpeur horizontal (9) et le tenon enfichable (2) traversent, de part et part, une paroi d'extrémité commune (11) du boîtier (1).

9. Dispositif de verrouillage selon l'une des revendications 5 à 8, **caractérisé par le fait que** l'unité de déclenchement (5) est pourvue d'un crochet intercepteur (12) contre lequel le palpeur vertical (8), et/ou le palpeur horizontal (9), vien(nen)t en butée par son (leur) côté pointant à l'opposé du raccord (6) de conteneur.

10. Dispositif de verrouillage selon la revendication 9, **caractérisé par le fait que** le tenon rotatif (3) ou le tenon enfichable (2) est arrêté par le crochet intercepteur (12), dans la position d'ouverture, en opposition à la précontrainte de l'élément élastique.

11. Dispositif de verrouillage selon la revendication 9 ou 10, **caractérisé par le fait qu'**un élément intercepteur (13), ménagé sur le tenon rotatif (3) ou sur le tenon enfichable (2), emprisonne le crochet intercepteur (12) par-derrière dans la position d'ouverture.

12. Dispositif de verrouillage selon la revendication 11, **caractérisé par le fait que** l'élément intercepteur (13) est doté, sur son côté tourné vers le crochet intercepteur (12), d'une surface d'impact (14) contre laquelle ledit crochet intercepteur (12) vient buter, au cours du pivotement rétrograde du tenon rotatif (3) ou du tenon enfichable (2) vers la position d'ouverture à partir de la position de verrouillage, et glisse ensuite jusqu'à atteindre ladite position d'ouverture.

13. Dispositif de verrouillage selon la revendication 11 ou 12, **caractérisé par le fait que**, lors d'une insertion du palpeur vertical (8) ou du palpeur horizontal (9) dans le boîtier (1), le crochet intercepteur (12) se libère de la prise opérante avec l'élément intercepteur (13), et l'élément élastique (4) meut le tenon enfichable (2) et/ou le tenon rotatif (3) vers la position de verrouillage.

14. Dispositif de verrouillage selon l'une des revendications 1 à 13, **caractérisé par le fait qu'**un levier d'actionnement (15), s'engageant sur le tenon rotatif (3) avec blocage rotatoire, permet d'amener ledit tenon rotatif (3) à la position d'ouverture à partir de la position de verrouillage, et d'amener alors l'élément élastique (4) à un emplacement précontraint.

15. Dispositif de verrouillage selon l'une des revendications 1 à 14, **caractérisé par le fait que** l'élément élastique (4) est un ressort de torsion (16) relié au boîtier (1) par sa première extrémité (16a), et au tenon rotatif (3) par sa seconde extrémité (16b).
